# EUROPEAN PATENT APPLICATION

(11) **EP 3 037 655 A1**
(43) Date of publication of application: **29.06.2016**
(21) Application number: 14199679.3
(22) Date of filing: 22.12.2014
(51) Int. Cl.: F03D 1/06

(54) **Rotor blade extension**

(71) Applicant: Siemens Aktiengesellschaft, 80333 München (DE)
(72) Inventor: Gonzalez, Alejandro Gomez, 8000 Aarhus (DK); Jensen, Sune Niemann, 8000 Aarhus (DK)

(57) **Abstract**

The invention describes a rotor blade extension (1) realized for mounting over a tip (20) of a wind turbine (3) rotor blade (2), comprising an airfoil extension portion (1_AF) realized to extend the length (L₂) of the rotor blade (2); a leading edge portion (1_LE) realized to cover a profile of the leading edge (LE) of the rotor blade (2); and a trailing edge portion (1_TE) realized to cover a profile of the trailing edge (TE) of the rotor blade (2). The invention further describes a wind turbine (3) comprising a number of rotor blades (2) and a rotor blade extension (1) according to the invention mounted to each rotor blade (2).

## Description

The invention describes a rotor blade extension; and a wind turbine.

Most of the wind energy that acts to turn the rotor of a wind turbine generator is harvested in the outermost part of wind turbine blades, and present-day wind turbines are designed to have increasingly large rotor diameters, whereby the rotor diameter is the diameter of a circle described by the rotor blade tips as they rotate.

The outermost end of the blade, also referred to as the tip region, is subject to several strict design criteria, such as leading edge radius, profile contour, twist orientation, trailing edge thickness, etc. When a blade fails to meet these design criteria, either through direct manufacturing deviations or through deterioration of the leading and/or trailing edges during the lifetime of the wind turbine, the result will be a decrease in annual energy production (AEP) and an increase in noise levels for the turbine.

The cost of wind energy produced by a wind turbine, i.e. the cost of manufacturing, erecting, commissioning, and maintaining the wind turbine, is inversely proportional to the AEP of the wind turbine. Therefore, it is desirable to increase the AEP of an existing rotor. One way of increasing the AEP of a wind turbine is to increase the rotor swept area, i.e. increasing the diameter of the rotor circle described by the blade tips. Extension of the rotor swept area by means of a blade extension can be done by either a root extension, in which an insert is placed between the hub and the root end of the blade; or by a tip extension placed outboard of the tip section of the blade. A root extension is generally a large and heavy section, since it must bear the complete loading of the blade. Furthermore, a root extension is aerodynamically inefficient.

A further drawback of a root extension is that the airfoil part of the blade is effectively shifted "outward", with the result that the aerodynamic properties of the altered blade can significantly deviate from the originally intended design, since the blade regions will operate in altered aerodynamic inflow conditions. In contrast, an extension mounted onto the blade tip can be designed to be aerodynamically efficient. For already installed wind turbines, tip extensions can be mounted onto each blade in a retro-fit step, and serve to extend the airfoil portion of the blade tip. A drawback of known tip extensions is that the increased tip speed increases the risk of deterioration of the edges in the blade tip region.

The quality and shape of the blades in their outermost regions has a significant influence on the power output and AEP of the wind turbine. It follows that the overall performance of a wind turbine is highly sensitive to any deviations from a designed blade shape in the tip region of the blade. In known approaches, protection against deterioration of an edge such as the leading edge can be accomplished by applying a coating or a thin sheet of polymer tape. Corrective measures are effectively limited to being carried out for a new installation, and seldom performed on the blades of an existing rotor. In another approach, the correction of leading-edge or trailing-edge defects of a new rotor blade can to some extent be accomplished by making local repairs to the blade surface during manufacturing. Again, such repairs are economically feasible for deviations that are detected prior to installing the blades, and the scope of this type of repair can be limited by blade design constraints.

It is therefore an object of the invention to provide a means of overcoming the problems described above.

This object is achieved by the rotor blade extension of claim 1; and by the wind turbine of claim 14.

According to the invention, the rotor blade extension is realized for mounting over a tip of a rotor blade of a wind turbine, and comprises an airfoil extension portion realized to extend the blade length; a leading edge portion realized to cover a portion of the profile of the leading edge of the rotor blade; and a trailing edge portion realized to cover a portion of the profile of the trailing edge of the rotor blade.

An advantage of the rotor blade extension according to the invention is that it allows for a correction of deviations in the blade shape. The correction of such deviations can be performed prior to installation of new rotor blades on a wind turbine, or in a retro-fit step of renovating damaged rotor blades of an existing wind turbine. The rotor blade extension according to the invention also allows a remodelling of parts of the outer blade surface, for example to introduce an entirely new shape at the blade tip region.

A further advantage of the rotor blade extension according to the invention is that the risk of leading edge erosion can be reduced, since the edges at the vulnerable outer end of the blade are effectively covered by the leading edge portion of the rotor blade extension which are designed to withstand higher levels of erosion.

According to the invention, the wind turbine comprises a number of rotor blades, and a rotor blade extension according to the invention mounted to each rotor blade.

An advantage of the wind turbine according to the invention is the favourable increase in the AEP that can be achieved on account of the effective increase in rotor swept area. Furthermore, the aerodynamic behaviour of the blades of the wind turbine according to the invention is actively improved in a region further outward, to an extent greater than previously possible.

Particularly advantageous embodiments and features of the invention are given by the dependent claims, as revealed in the following description. Features of different claim categories may be combined as appropriate to give further embodiments not described herein.

The airfoil portion of a rotor blade is defined by a number of parameters such as its chord length, i.e. the distance between the leading edge and trailing edge. In the following, the terms "airfoil extension portion" and "chord extension portion" may be used interchangeably.

The blade length is the distance from the root end of the blade at its attachment to the hub and to the rest of the wind turbine to the distal tip end. In the following, the term "blade length" is used to denote the length of the original blade without the tip extension described herein.

Preferably, the rotor blade extension is realized in one piece, i.e. the airfoil extension portion, the leading edge portion and the trailing edge portion are manufactured in one piece in a seamless manner. The airfoil extension portion covers the blade tip, while the edge portions extend inward in the direction of the blade root or hub. The blade extension may therefore have the appearance of a "hood" with a cut-out between the lateral edge portions.

In a particular embodiment of the invention, the airfoil portion extends outboard, i.e. effectively increasing the rotor diameter, by a distance of at least 0.5% of the blade length, more preferably at least 2% of the blade length. Note that most preferably, the airfoil extension portion extends outboard of the tip of the rotor blade by a distance between 2% of the blade length and 5% of the blade length.

As explained above, the quality of the leading and trailing edges of the blade is very important, since these have a direct influence on the annual energy production of the wind turbine. Therefore, in a preferred embodiment of the invention, the leading edge and/or trailing edge portion extends inboard by a distance of at least 1% of the blade length, more preferably at least 5% of the blade length, most preferably at least 10% of the blade length. The outer surfaces of an edge portion effectively assumes the function of the edge which it replaces, i.e. the outer surface of the leading edge portion assumes the function of the leading edge for the extent covered by the leading edge portion.

In another embodiment of the invention, the trailing edge portion not only covers the trailing edge of the rotor blade, but also significantly extends the chord length of the arrangement comprising the original rotor blade and the rotor blade extension in chordwise direction. More particularly, the chord length of the arrangement is increased towards the trailing edge of the rotor blade, compared to the rotor blade alone, without the rotor blade extension.

Likewise, in another embodiment of the invention, the leading edge portion not only covers the leading edge of the rotor blade, but also significantly extends the chord length of the arrangement comprising the original rotor blade and the rotor blade extension in chordwise direction. More particularly, the chord length of the arrangement is increased towards the leading edge of the rotor blade, compared to the rotor blade alone, without the rotor blade extension.

Both embodiments may also be combined such that the arrangement is extended both at the trailing edge and at the leading edge compared to the rotor blade alone, without the rotor blade extension.

A problem with known tip extensions is the increased blade loading, since the additional aerodynamic loading is transferred to the rest of the blade. Another critical issue is the increase in tip deflection compared to the original blade configuration. In many cases, and in particular for modern long flexible slender blades, an increase in loading, and in particular an increase in tip deflection, must be avoided on account of the permissible load envelope and the required tower clearance of the rotor.

Therefore, in a particularly preferred embodiment of the invention, the rotor blade extension comprises a degree of "pre-bend" such that the airfoil extension portion is tilted outward from a longitudinal axis of the rotor blade. Here, the term "tilted outward" is to be understood such that the airfoil extension portion is bent to face "into the wind", i.e. away from the tower. The pre-bent airfoil extension portion allows a favourable increase in rotor swept area, while maintaining an essentially constant, (or only negligibly increased) tip deflection. An advantage of the outwardly pre-bent airfoil extension portion of the rotor blade extension is that it becomes possible to upgrade existing wind turbine for which a tip deflection constraint applies.

In a preferred embodiment of the wind turbine according to the invention, a rotor blade exhibits an "outwardly bent" shape when stationary, i.e. it bends away from the tower when stationary, and assumes a straighter shape when rotating. With a rotor blade extension according to the invention, for which the airfoil extension portion has an outwardly pre-bent form, the rotor swept area of such a pre-bent blade can be increased even further, since the rotor blade extension is designed in such a way as to further increase the distance between the extended blade tip and the tower.

In a further preferred embodiment of the rotor blade extension according to the invention, a longitudinal axis of the airfoil extension portion is skewed relative to the longitudinal axis of the rotor blade. When such a rotor blade extension is mounted onto a rotor blade, the blade exhibits "sweep". The sweep introduced by the blade extension serves to further increase the bend-twist coupling, with the effect that blade loading is passively reduced. The positive effect is even more pronounced when the blade tip extension is mounted onto a "swept-back" blade, i.e. a blade for which the outer tip portion is already angled towards the trailing edge.

The aerodynamic noise generated by a wind turbine rotor blade is directly related to the tip speed of the blade. Therefore, in a preferred embodiment of the invention, the rotor blade extension comprises a number of serrated or saw-toothed elements arranged on the trailing edge portion. Such elements serve to favourably reduce or even eliminate the additional aerodynamic noise impact that would otherwise be generated by the extended tip region. The rotor blade extension according to the invention therefore makes it possible to achieve a noise- neutral tip extension, or with a marginal noise penalty, permitting a direct decrease in the cost of energy (by increasing the rotor swept area) while at the same time not increasing, or increasing marginally the overall noise level.

Vortex generators can be used to avoid separation of the boundary layer in the outboard sections of the blade, and to increase the robustness of the turbine. Therefore, in a particularly preferred embodiment of the invention, the rotor blade extension comprises a number of vortex generators arranged on a surface of the rotor blade extension. Preferably the vortex generators are applied on the suction surface of the blade extension, for example along the leading edge portion. With such an arrangement of vortex generators, aerodynamic noise resulting from the rotor blade extension can be counteracted or even eliminated.

In a further preferred embodiment of the invention, the rotor blade extension comprises a number of active devices realized to alter a surface shape of the rotor blade extension. For example, an active device can comprise a hydraulic, pneumatic, or piezoelectric device, or any other type of active actuator used to operate e.g. a flap at the trailing edge and can act to alleviate the loading of the turbine under different loading conditions.

In a further preferred embodiment of the invention, the rotor blade extension comprises least one flow control device realized to react in response to a passive impulse or signal. For example, a flow control device such as a flexible flap can be activated according to the relative wind speed of the rotor blade.

When the rotor blades rotate, the flow meets the leading edge first, which is therefore more exposed to environmental influences in comparison to the trailing edge. For this reason, the leading edge can tend to wear faster than the trailing edge. In a preferred embodiment of the invention, therefore, the leading edge portion extends further inboard than the trailing edge portion.

Lightning strikes to rotor blades are quite common, and a rotor blade is therefore generally equipped with some means of lightning protection, for example a lightning conductor arranged along the length of the blade and a receptor at the tip end. A lightning strike will generally hit the blade at its outer end. Therefore, in a preferred embodiment of the invention, the rotor blade extension comprises a lightning protection arrangement. For example, a receptor and conductor can be arranged such that an electrical connection is made to an existing lightning protection arrangement of the blade to which the extension is mounted.

A rotor blade is generally not hermetically sealed, and water can enter the blade in various ways. To prevent a build-up of water in the blade and to avoid the resulting damage during freezing conditions, a rotor blade generally comprises a drainage arrangement with small openings at the blade tip to allow moisture to leak out of the blade. In a preferred embodiment of the invention, the rotor blade extension also comprises a drainage arrangement, for example one or more holes at an outer end, so that water escaping from the original blade can also escape from the rotor blade extension.

Preferably, the rotor blade extension is realized to fit flush over the blade tip. This can be achieved by applying a suitable manufacturing technique to make the rotor blade extension. For example, the rotor blade extension is preferably made using a casting technique, since this allows a greater degree of accuracy than the lamination procedures generally used to construct the original rotor blade.

In a further preferred embodiment of the invention, the rotor blade extension can be made to have a signal colour, so that the extensions (and therefore the rotor swept area of the wind turbine) are made visible, for example for aviation purposes or bird collision mitigation purposes. The signal colour can be applied as a coating and/or can be incorporated in the material of the rotor blade extension.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Fig. 1 shows an extended rotor blade comprising a first embodiment of a rotor blade extension according to the invention in place over a rotor blade tip;
Fig. 2 shows schematically a cross-section of the extended rotor blade of Fig. 1;
Fig. 3 shows a second embodiment of a rotor blade extension according to the invention;
Fig. 4 shows a cross-section of the rotor blade extension of Fig. 3;
Fig. 5 shows a third embodiment of a rotor blade extension according to the invention;
Fig. 6 shows a fourth embodiment of a rotor blade extension according to the invention;
Fig. 7 and 8 show an embodiment of a wind turbine according to the invention.

In the diagrams, like numbers refer to like objects throughout. Objects in the diagrams are not necessarily drawn to scale.

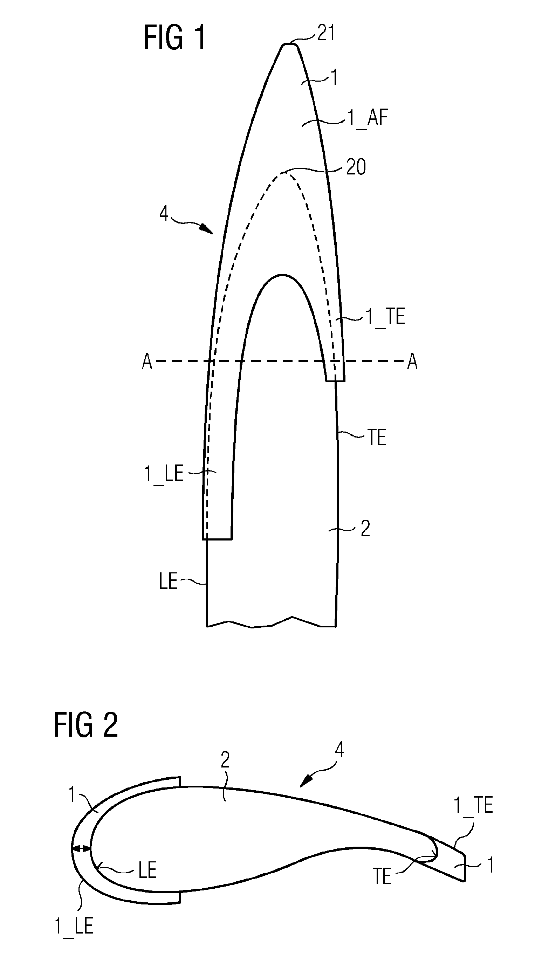

Fig. 1 shows the outboard part of an extended rotor blade 4 of a wind turbine 3. The extended rotor blade 4 comprises a first embodiment of a rotor blade extension 1 according to the invention, which is in place over the tip 20 of the rotor blade 2. The rotor blade 2 comprises a trailing edge TE and a leading edge LE. The rotor blade 2 is tapered, i.e. pointed, and comprises a tip 20. Reference sign 20 refers to the tip of the "original" rotor blade 2, i.e. the rotor blade 2 without any rotor blade extension. Once the rotor blade extension 1 is attached to the rotor blade 2, the extended rotor blade 4 is obtained. Reference sign 21 refers to the tip of the extended rotor blade 4, thus, it is also referred to as the "extended tip" 21.

The rotor blade extension 1 is shown to comprise an airfoil extension portion 1_AF that effectively extends the length of the rotor blade 2; a leading edge portion 1_LE that is used to cover or extend a portion of the leading edge LE of the rotor blade 2; and a trailing edge portion 1_TE that is used to correct a profile of the trailing edge TE of the rotor blade 2. Conventional tip extensions generally only comprise an airfoil extending portion that is used to cover or extend a portion of the trailing edge TE of the rotor blade 2. In the blade extension 1 according to the invention, not only is the overall blade length favourably increased by the airfoil portion 1_AF, but the leading edge and trailing edges are also corrected and/or optimised by the portions 1_LE, 1_TE.

Fig. 2 shows a cross-section of the extended rotor blade 4 at the line A-A of Fig. 1. The cross-sectional illustration shows how the leading edge portion 1_LE covers or extends the original leading edge LE of the rotor blade 2, and how the trailing edge portion 1_TE covers or extends the original trailing edge TE of the rotor blade 2. Deviations during manufacturing and/or sub-optimal design features can be covered, i.e. corrected by the correction portions 1_LE, 1_TE, as well as new designs can be elaborated with the use of these portions 1_LE and 1_TE.

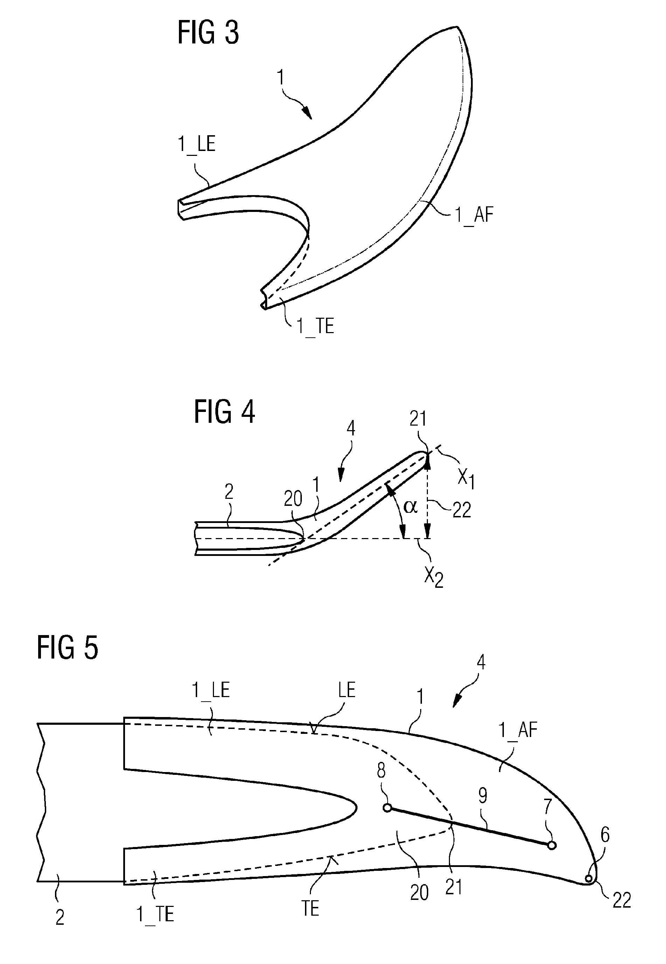

Fig. 3 shows a second embodiment of a rotor blade extension 1 according to the invention. Here, the rotor blade extension 1 exhibits a significant degree of pre-bend, i.e. the airfoil portion 1_AF is bent outwards so that, when mounted onto a rotor blade, the airfoil portion 1_AF will face "into the wind".

The extent of the pre-bend is shown in cross-section in Fig. 4, which shows a longitudinal axis X₂ of the rotor blade 2 and a longitudinal axis X₁ extending through the airfoil portion 1_AF of the rotor blade extension 1.

A first approach to characterize and quantify the extent of the pre-bend of the rotor blade extension 1 is an angle α subtended by these axes X₂, X₁.

A second approach to characterize and quantify the extent of the pre-bend of the rotor blade extension 1 is the distance 22 between the extended tip 21 and the longitudinal axis X₂. This distance 22 relates to the amount by which the distance between the tip of the rotor blade and the tower of the wind turbine is increased.

For a rotor blade 2 with a blade length of fifty meters, a distance 22 between the extended tip 21 and the longitudinal axis X₂ of at least 0.5 meters is advantageous. Preferably, the distance 22 between the extended tip 21 and the longitudinal axis X₂ is at least one meter.

Likewise, for a rotor blade 2 with a blade length of one hundred meters, a distance 22 between the extended tip 21 and the longitudinal axis X₂ of at least one meter is advantageous. Preferably, the distance 22 between the extended tip 21 and the longitudinal axis X₂ is at least two meters.

Fig. 5 shows a third embodiment of a rotor blade extension 1 according to the invention. In this example, the portions 1_LE, 1_TE have essentially the same length. The rotor blade 2 comprises a swept-back tip, i.e. the tip of the blade is angled more towards the trailing edge TE than towards the leading edge LE. In this embodiment, the airfoil portion 1_AF is also "swept back", so that the sweep of the original blade design is repeated or even increased by the sweep of the rotor blade extension 1. This embodiment can be combined with the embodiment of Fig. 4, for example, to give a rotor blade extension 1 that exhibits sweep as well as pre-bend.

The rotor blade extension 1 of Fig. 5 also comprises a drainage hole 6 for enabling liquid, such as water, to exit the inside of the extended rotor blade 4. Furthermore, the rotor blade extension 1 comprises an extension lightning receptor 7 for attracting lightning strikes, which typically strike a rotor blade in the proximity of the tip. The extension lightning receptor 7 is added to the lightning receptor 8 of the original rotor blade 2, or it substitutes the lightning receptor 8 of the original rotor blade 2. In both cases, the extension lightning receptor 7 and the lightning receptor 8 of the original rotor blade 2 are electrically connected by a connection element 8. This enables to connect the extension lightning receptor 7 to an existing lightning conductor system of the rotor blade 2 and the wind turbine 3 as a whole.

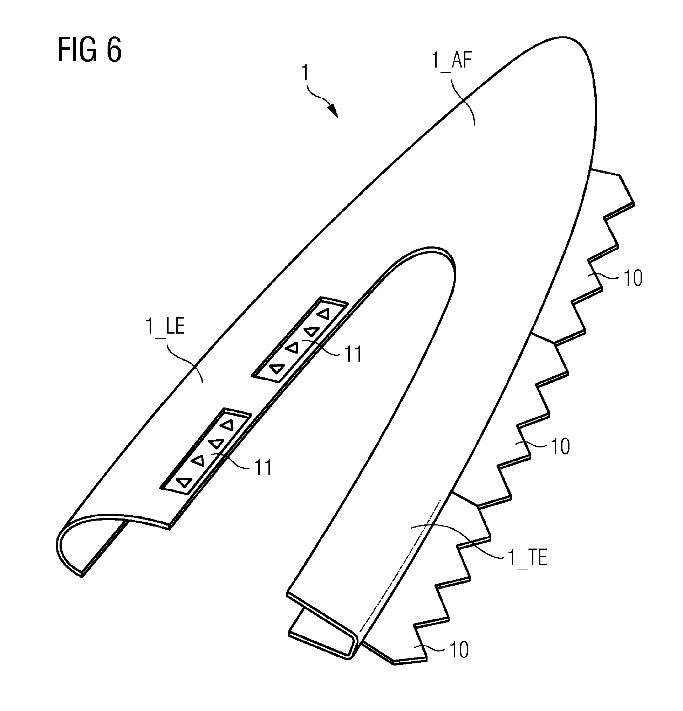

Fig. 6 shows a fourth embodiment of a rotor blade extension 1 according to the invention. Here, vortex generator elements 11 have been applied to the leading edge portions 1_LE on the suction side. Note that, additionally, vortex generator elements 11 may also be applied further outboard on the rotor blade extension1, i.e. on the airfoil extension portion 1_AF. In the fourth embodiment of a rotor blade extension 1, also serrated elements 10 have been attached to the trailing edge portion 1_TE. Alternatively, the serrated elements 10 may also be extended all the way to the distal end of the rotor blade extension 1. The effect of these elements 10 is to reduce or eliminate the noise that would otherwise be generated on account of the increase in rotor swept area resulting from the blade extension. In the diagram, the lengths of the edge portions 1_LE, 1_TE are shown to be approximately equal, but their lengths may also be different.

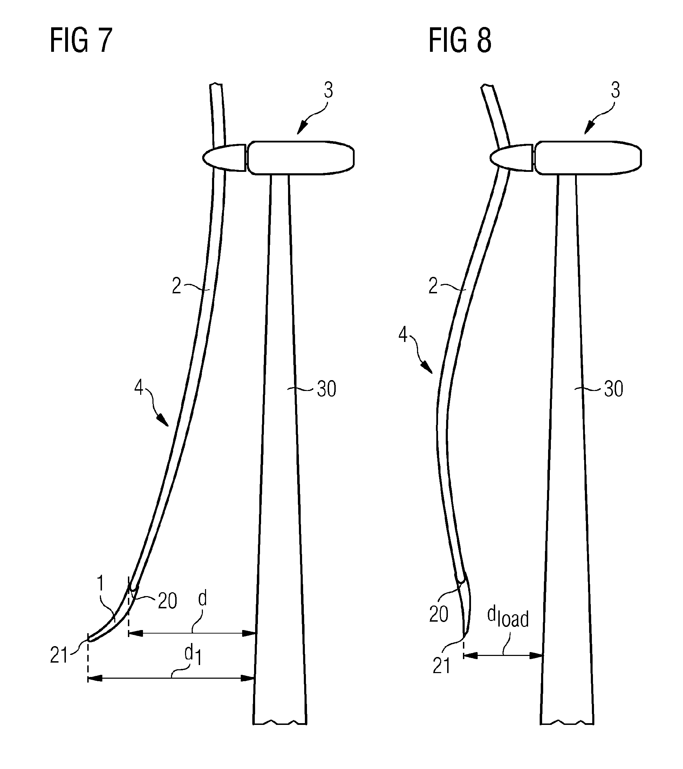

Fig. 7 and Fig. 8 show an embodiment of a wind turbine 3 according to the invention.

In Fig. 7, the wind turbine 3 is at stand-still, so that the rotor blades 2 are not rotating. The diagram illustrates the position of a rotor blade 2 relative to the tower 30 of the wind turbine 3, and indicates the distance d between the "original" tip 20 of the rotor blade 2 and the tower 30. The diagram also indicates the increased distance d₁ between the extended tip 21 of the extended rotor blade 4 and the tower 30.

In Fig. 8, the wind turbine 3 is operational, and the rotor blades 2 are rotating. The diagram shows that the distance d_{load} between the extended tip 21 and the tower 30 is still favourably sufficient, i.e. the rotor blade extension 1 does not significantly alter the distance between tip of the extended rotor blade 4 and the tower 30 during operation of the wind turbine 3.

Although the present invention has been disclosed in the form of preferred embodiments and variations thereon, it will be understood that numerous additional modifications and variations could be made thereto without departing from the scope of the invention.

For the sake of clarity, it is to be understood that the use of "a" or "an" throughout this application does not exclude a plurality, and "comprising" does not exclude other steps or elements.

## Claims

1. A rotor blade extension (1) realized for mounting over a tip (20) of a rotor blade (2) of a wind turbine (3), comprising
- an airfoil extension portion (1_AF) realized to extend the length (L₂) of the rotor blade (2);
- a leading edge portion (1_LE) realized to cover a portion of the profile of the leading edge (LE) of the rotor blade (2); and
- a trailing edge portion (1_TE) realized to cover a portion of the profile of the trailing edge (TE) of the rotor blade (2).

2. A rotor blade extension according to claim 1, wherein the airfoil extension portion (1_AF) extends outboard of the tip (20) of the rotor blade (2) by a distance of at least 0.5% of the blade length, in particular by a distance of at least 2% of the blade length.

3. A rotor blade extension according to any of the preceding claims, wherein the airfoil extension portion (1_AF) extends outboard of the tip (20) of the rotor blade (2) by a distance of at most 20% of the blade length, in particular by a distance of at most 10% of the blade length.

4. A rotor blade extension according to any of the preceding claims, wherein the leading edge portion (1_LE) and/or the trailing edge portion (1_TE) extend inboard by a distance of at least 1% of the blade length, more preferably by a distance of at least 5% of the blade length.

5. A rotor blade extension according to any of the preceding claims, realized such that the airfoil extension portion (1_AF) is tilted outward from a longitudinal axis (X₂) of the rotor blade (2).

6. A rotor blade extension according to any of the preceding claims, realized such that a longitudinal axis (X₁) of the airfoil extension portion (1_AF) is skewed towards the trailing edge (TE) of the rotor blade (2) relative to the longitudinal axis (X₂) of the rotor blade (2).

7. A rotor blade extension according to any of the preceding claims, comprising a number of serrated elements (10) arranged on the trailing edge portion (1_TF).

8. A rotor blade extension according to any one of the preceding claims, wherein the leading edge portion (1_LE) is coated for protecting the rotor blade (2) against corrosion of the leading edge (LE).

9. A rotor blade extension according to any of the preceding claims, comprising a number of vortex generator elements (11) arranged on a surface of the rotor blade extension (1).

10. A rotor blade extension according to any of the preceding claims, wherein the leading edge portion (1_LE) extends further inboard than the trailing edge portion (1_TE).

11. A rotor blade extension according to any of the preceding claims, wherein the rotor blade extension (1) is realized to fit flush over the tip (20) of the rotor blade (2).

12. A rotor blade extension according to any of the preceding claims, wherein
- the leading edge portion (1_LE) is realized to extend a portion of the profile of the leading edge (LE) of the rotor blade (2) in chordwise direction; and/or
- the trailing edge portion (1_TE) is realized to extend a portion of the profile of the trailing edge (TE) of the rotor blade (2) in chordwise direction.

13. A rotor blade extension according to any of the preceding claims, comprising a coating in a signal colour.

14. A wind turbine (3) comprising a number of rotor blades (2) and a rotor blade extension (1) according to any of claims 1 to 13 mounted to each rotor blade (2).

15. A wind turbine (3) according to claim 14, wherein a rotor blade (2) comprises an aero-elastic rotor blade.
